(19) Europäisches Patentamt / European Patent Office / Office européen des brevets

(11) **EP 1 668 433 B1**

(12) **EUROPÄISCHE PATENTSCHRIFT**

(45) Veröffentlichungstag und Bekanntmachung des Hinweises auf die Patenterteilung:
**16.12.2009   Patentblatt 2009/51**

(51) Int Cl.:
*G05B 19/042* (2006.01)     *F02D 41/24* (2006.01)

(21) Anmeldenummer: **04766770.4**

(86) Internationale Anmeldenummer:
**PCT/EP2004/052142**

(22) Anmeldetag: **13.09.2004**

(87) Internationale Veröffentlichungsnummer:
**WO 2005/033811 (14.04.2005 Gazette 2005/15)**

(54) **VERFAHREN UND ANORDNUNG ZUR VERÄNDERUNG VON NUMERISCHEN FELDWERTEN**

METHOD AND ARRANGEMENT FOR MODIFYING DIGITAL FIELD VALUES

PROCEDE ET DISPOSITIF DE MODIFICATION DE VALEURS DE CHAMP NUMERIQUES

(84) Benannte Vertragsstaaten:
**DE FR GB IT**

(30) Priorität: **29.09.2003   DE 10345228**

(43) Veröffentlichungstag der Anmeldung:
**14.06.2006   Patentblatt 2006/24**

(73) Patentinhaber: **Continental Automotive GmbH**
**30165 Hannover (DE)**

(72) Erfinder: **RUSS, Andreas**
**93105 Tegernheim (DE)**

(56) Entgegenhaltungen:
**WO-A-89/04425**

- **PAUL TURNER: "Grace ein graphisches Analyse-Tool für 2D Daten" 21. Januar 2003 (2003-01-21), FORSCHUNGSZENTRUM JÜHLICH , JÜHLICH , XP002311562 Gefunden im Internet: URL:http://web.archive.org/web/20030910235 608/www.fz-juelich.de/zam/files/docs/bhb/b hb-0161.pdf> User's Guide: Seite 25, 34, 35 Tutorial: Seite 13 FAQ: Seite 22**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 668 433 B1

**Beschreibung**

Die Erfindung betrifft ein Verfahren und eine Vorrichtung zur Veränderung von numerischen Feldwerten in einem Wertefeld, insbesondere von Parametern, die bei einer Steuerung eines Betriebes einer Maschine in einem Kraftfahrzeug verwendet werden.

Insbesondere bei der Entwicklung von Steuerungseinrichtungen zur Steuerung des Betriebes von Maschinen werden eine Vielzahl von Parametern verwendet. Unter einer Maschine wird eine Gesamtheit von beweglichen Teilen und/oder Vorrichtungen verstanden. Die Maschine kann von außen angetrieben werden (z. B. Getriebe eines Kraftfahrzeuges) oder selbst unter Einsatz einer geeigneten Energieform kinetische Energie erzeugen (z. B. Brennkraftmaschine eines Kraftfahrzeuges) Weitere Anwendungsgebiete betreffen z. B. Steuerungseinrichtungen für Fensterheber in Fahrzeugen, Einrichtungen zur Erfassung und Anzeige des Reifenluftdruckes in Kraftfahrzeugen, Steuerungseinrichtungen für Antiblockiersysteme (ABS) und für elektronische Systeme zur Fahrwerkstabilisierung in Kraftfahrzeugen (Electronic Stability Program, ESP). Für Entwickler derartiger Einrichtungen, insbesondere Steuerungseinrichtungen, ist es erforderlich, die Vielzahl der Parameter in einer für den späteren Betrieb geeigneten Weise vorzugeben oder einzustellen.

Insbesondere bei Steuerungseinrichtungen zur Steuerung des Betriebes von Maschinen hängen die Parameter häufig von physikalischen Betriebsgrößen wie einem Drehmoment, einer Last und/oder einer Drehzahl der Maschine, sowie weiteren, Steuerungseinrichtungs-internen Größen (z. B. in Fehlerspeichern hinterlegten Daten) ab. Beispielsweise soll abhängig von einer oder mehreren der Betriebsgrößen ein Proportionalanteil oder ein Integralanteil eines Reglers (z. B. eines Drehmoment-Reglers) vorgegeben werden. In einem anderen Beispiel ist die physikalische Größe, von der die Parameterwerte abhängen, eine Temperatur (etwa eine Kühlflüssigkeitstemperatur eines Kühlkreislaufs der Maschine).

Allgemeiner formuliert existiert ein Wertefeld mit einer Vielzahl von numerischen Feldwerten und sollen die Feldwerte - oder zumindest ein Teil davon - eingestellt werden. Das Wertefeld ist häufig ein- oder zweidimensional, d. h. jeder Feldwert ist einem Wert einer Feldvariablen oder jeweils einem Wertepaar von zwei Feldvariablen zugeordnet.

Bekannt ist es, Feldwerte einzeln zu verändern. Weiterhin ist es bekannt, Bereiche von Feldwerten über die Eingabe mathematischer Formeln gleichzeitig zu verändern. Hierzu wird der Anwender beispielsweise aufgefordert, die Formel oder Vorschrift in eine Datenverarbeitungsanlage einzugeben. Beispielsweise kann der Anwender zunächst einen Bereich des Wertefeldes selektieren und dann die Vorschrift eingeben, dass alle Feldwerte des selektierten Bereichs mit einem Faktor multipliziert werden oder durch einen Faktor dividiert werden oder um einen bestimmten Wert vergrößert oder verkleinert werden. Nachteilig an dieser Vorgehensweise ist, dass der Verlauf der Feldwerte an den Grenzen der selektierten Bereiche unstetig wird. Weiterhin ist der Aufwand für die Eingabe der Vorschrift hoch, die angibt, wie die Feldwerte in dem selektierten Bereich verändert werden sollen. Auch können gewünschte neue Gestaltungen der Feldwerte in einem selektierten Bereich in vielen Fällen nur durch wiederholte Eingabe von Vorschriften zur Veränderung der Feldwerte erreicht werden. Beispielsweise muss für einen zentralen Teilbereich eines selektierten Bereichs, der stärker verändert werden soll als der restliche Teil des selektierten Bereichs, in einem separaten Veränderungsschritt eine weitere Veränderungsvorschrift eingegeben werden.

Paul Turner: "Grace ein graphisches Analyse-Tool für 2D Daten", XP 002311562, offenbart ein graphisches Analyse-Tool für zweidimensionale Daten. Durch eine alphanumerische Eingabe kann eine Variable al einer Veränderungsbeziehung verändert werden.

WO 89/04425 A offenbart einen Computer zur Benzineinspritzung, der von einem Benutzer modifiziert werden kann, während der Motor in Betrieb ist.

Es ist eine Aufgabe der vorliegenden Erfindung, ein Verfahren und eine Vorrichtung der eingangs genannten Art anzugeben, die es auf einfache Art und mit möglichst geringem Aufwand ermöglichen, eine Vielzahl von Feldwerten in einer gewünschten Weise zu verändern.

Es wird vorgeschlagen, eine Veränderungsbeziehung zu definieren oder zu verwenden, die eine Veränderung einer Vielzahl der numerischen Feldwerte in Abhängigkeit von dem Abstand der Feldwerte zu einem oder mehreren ausgewählten Feldwerten und in Abhängigkeit von einer Veränderungsstärke-Variablen beschreibt. Aus einer Art einer Handhabung von Eingabemitteln einer Datenverarbeitungseinrichtung kann dann ermittelt werden, welcher Wert der Veränderungsstärke-Variablen zu verwenden ist. Weiterhin kann dann aus einem Auswahl-Eingangssignal ermittelt werden, welcher Feldwert ausgewählt ist oder welche Feldwerte ausgewählt sind. Aus zumindest einer Zeitdauer einer Betätigung der Eingabemittel, einer Frequenz einer Betätigung der Eingabemittel, einer Häufigkeit einer Betätigung der Eingabemittel, einer Kraft einer Betätigung der Eingabemittel, einer Größe einer Fläche der Eingabemittel, auf die Druck ausgeübt wird, einer Geschwindigkeit einer Betätigung der Eingabemittel, einer Beschleunigung einer Betätigung der Eingabemittel, oder einer Geschwindigkeit einer Bewegung der Eingabemittel der Datenverarbeitungseinrichtung, welcher Wert der Veränderungsstärke-Variablen zu verwenden ist.

Diese Vorgehensweise erlaubt eine Veränderung einer Vielzahl der numerischen Feldwerte entsprechend der Veränderungsbeziehung. Insbesondere werden die numerischen Feldwerte derart in der Datenverarbeitungseinrichtung geladen und/oder gespeichert, dass innerhalb des Wertefeldes jeweils ein Abstand zwischen den Feldwerten definiert ist und/oder ermittelbar ist.

Die Veränderungsbeziehung wird vorzugsweise vor der Handhabung der Eingabemittel und vor der Auswahl des oder der Feldwerte definiert. Z. B. kann die Veränderungsbeziehung (oder zumindest Informationen darüber) von einer Veränderungsbeziehungs-Einrichtung gespeichert bzw. aufgenommen sein oder gespeichert bzw. aufgenommen werden. Somit liegt die Veränderung der Vielzahl von Feldwerten noch nicht fest. Es fehlt noch eine Auswahl des oder der Feldwerte, wodurch erst die Veränderungsbeziehung relativ zu dem Wertefeld positioniert wird. Anders ausgedrückt: Es fehlt noch der Bezugspunkt bzw. Bezugsbereich der Veränderungsbeziehung in dem Wertefeld.

Weiterhin ist mit der Definition der Veränderungsbeziehung noch nicht die Stärke der Veränderung festgelegt, welche erst durch Auswertung der Art und Weise ermittelt wird, wie die Eingabemittel der Datenverarbeitungseinrichtung gehandhabt werden.

Somit ist es möglich, die Veränderungsbeziehung als qualitative Funktion des Abstandes eines zu verändernden Feldwertes zu einem noch auszuwählenden Feldwert vorzugeben, und ein Anwender kann sowohl die Auswahl des oder der Feldwerte vornehmen als auch durch die Art der Handhabung der Eingabemittel die Stärke der Veränderung und damit die Veränderungsbeziehung quantitativ festlegen. Es ist daher möglich, die Veränderungsbeziehung vielfach und in unterschiedlicher Weise für verschiedene Veränderungsprozesse zu verwenden.

Insbesondere ist es möglich, eine Veränderungsbeziehung vorzugeben oder zu verwenden, die eine mit zunehmendem Abstand zu dem noch auszuwählenden Feldwert abnehmende Veränderung bewirkt. Bei einer speziellen Ausgestaltung der Veränderungsbeziehung weist diese eine mit zunehmendem Abstand asymptotisch oder hyperbolisch abnehmend verlaufende Funktion auf, welche die Veränderung beschreibt. Es können jedoch auch andere Verläufe der Veränderungsbeziehung eingesetzt werden. Hat die Veränderungsbeziehung einen Verlauf, der eine jedenfalls in einem Randbereich des Veränderungsgebietes mit zunehmendem Abstand abnehmende Veränderung der Feldwerte definiert, ist ein stetiger Verlauf der Größe der Feldwerte in dem Randbereich erzielbar.

Die Veränderungsbeziehung kann weitere Abhängigkeiten aufweisen. Z. B. kann durch ein Eingabesignal eine Vorzeichenumkehr der Veränderung bewirkt werden, etwa abhängig davon, ob eine bestimmte Taste der Eingabemittel betätigt wird. Im Fall eines anderen Eingabemittels kann durch eine bestimmte Betätigungsart ebenfalls eine Wahl des Vorzeichens bewirkt werden, z. B. bei einem Touchpad durch Berühren eines bestimmten Bereichs. Weiterhin ist es möglich, die Veränderungsbeziehung so zu definieren, dass die Größe des Veränderungsbereichs (d. h. des Bereichs innerhalb des Wertefeldes, in dem Feldwerte verändert werden) variabel und/oder abhängig von zumindest einem Eingangssignal eingestellt wird. Beispielsweise kann die Größe des Veränderungsbereichs wiederum abhängig von der Art der Handhabung der Eingabemittel und insbesondere abhängig von dem Wert der Veränderungsstärke-Variablen sein.

Bei einer bevorzugten Ausgestaltung wird zumindest ein Teil des Wertefeldes auf einem Darstellungsmittel bildlich dargestellt. Dadurch werden vorteilhafte Weiterbildungen des Verfahrens ermöglicht, die im Folgenden beschrieben werden.

Zum einen ermöglicht es die Darstellung auf dem Darstellungsmittel, eine Zeigereinrichtung zur Auswahl des oder der Feldwerte zu verwenden. Insbesondere entspricht in diesem Fall das oben genannte Auswahl-Eingangssignal einer durch die Zeigereinrichtung gesteuerten Position auf dem Darstellungsmittel. Bei der Zeigereinrichtung handelt es sich z. B. um eine Maus, eine ortsfeste Zeigereinrichtung mit einem drehbaren Element zur Veränderung der Position (z. B. einen Trackball) oder um eine Einrichtung mit einer berührungsempfindlichen Fläche zur Veränderung der Position (z. B. ein Touchpad). Es ist jedoch auch möglich, z. B. Pfeiltasten einer Tastatur zur Veränderung der Position einzusetzen.

Weiterhin kann im Fall der bildlichen Darstellung auf dem Darstellungsmittel nach folgender Verfahrensweise vorgegangen werden. Es wird zumindest ein Teil der veränderten numerischen Feldwerte oder einer anderen Darstellung der Veränderung während eines Veränderungsvorganges auf dem Darstellungsmittel bildlich dargestellt. Weiterhin wird während des Veränderungsvorganges wiederholt aus dem Auswahl-Eingangssignal (insbesondere aus der durch die Maus gesteuerten Zeigerposition auf dem Darstellungsmittel) ermittelt, welcher Feldwert momentan ausgewählt ist oder welche Feldwerte momentan ausgewählt sind. Die Veränderungsbeziehung wird dann abhängig von dem momentan ausgewählten Feldwert oder von den momentan ausgewählten Feldwerten angewendet, um die Vielzahl der numerischen Feldwerte zu verändern. Z. B. kann ein Andauern des Veränderungsvorganges dadurch signalisiert werden, dass eine bestimmte Taste gedrückt gehalten wird (etwa eine Maustaste), und kann die Zeigerposition währenddessen verändert werden, um die Auswahl des oder der Feldwerte zu verändern. Diese Verfahrensweise erlaubt also eine Relativverschiebung des Bezugspunktes oder des Bezugsgebietes der Veränderungsbeziehung in dem Wertefeld und somit eine gleitende Verlagerung des Veränderungsgebietes, innerhalb dessen Feldwerte verändert werden. Durch längeres Verweilen bei einem oder mehreren ausgewählten Feldwerten können beispielsweise die Feldwerte in einem bestimmten zugehörigen Veränderungsgebiet stärker verändert werden.

Eine weitere Möglichkeit, die bildliche Darstellung zu nutzen, besteht darin, dass ein Teil der veränderten numerischen Feldwerte oder eine Darstellung einer potenziellen Veränderung während eines Veränderungsvorganges auf dem Darstellungsmittel bildlich dargestellt werden, so dass aus den veränderten numerischen Feldwerten oder aus der Darstellung der potenziellen Veränderung eine momentan eingestellte Veränderungsstärke entnehmbar ist. Ein Anwender kann somit aus der bereits erfolgten Veränderung oder aus der dargestellten potenziellen Veränderung Informationen über die Veränderungsstärke entnehmen. Beispielsweise kann die der momentan eingestellten Veränderungsstärke entsprechende quantitative Veränderungsbeziehung dargestellt werden. Bei einer Ausführungsform kann es dann dem Anwender überlassen bleiben, ob er die potenzielle Veränderung tatsächlich wirksam werden lässt oder ob er sogar eine bereits dargestellte Veränderung der numerischen Feldwerte rückgängig macht.

Bei einer bevorzugten Ausführungsform wird die Vielzahl der veränderten numerischen Feldwerte gespeichert und bei der Steuerung des Betriebes einer Kraftfahrzeug-Maschine verwendet. Beispielsweise werden die veränderten (und ggf. auch die unveränderten) numerischen Feldwerte in einem Datenspeicher (etwa einem RAM, einem DualPort RAM oder einem EPROM) einer Steuerungseinrichtung des Kraftfahrzeuges gespeichert. Sie können dann bei Bedarf, z. B. wenn neue optimierte Feldwerte zur Verfügung stehen, später aktualisiert werden. Für die Aktualisierung besteht beispielsweise während der Entwicklung eines Gerätes, im Rahmen einer Wartung des Kraftfahrzeuges in der Werkstatt oder bei einer Einsendung der Steuerungseinrichtung zum Hersteller Gelegenheit. Bei der Steuerung des Betriebes der Maschine entspricht einer Feldvariablen, die sich entlang einer Erstreckung des Wertefeldes verändert (die also das Wertefeld in einer Richtung aufspannt), beispielsweise ein Drehmoment, eine Last oder eine Drehzahl der Maschine.

Im Folgenden wird näher darauf eingegangen, wie aus der Art der Handhabung der Eingabemittel die Veränderungsstärke ermittelt werden kann.

Eine Möglichkeit besteht darin, eine Zeitdauer einer Betätigung der Eingabemittel auszuwerten. Dabei ist der Wert der Veränderungsstärke-Variablen beispielsweise umso größer, je länger die Zeitdauer ist. Eine besonders einfache Bedienung ist bei Verwendung einer Zeigereinrichtung gegeben, die außerdem die Eingabemittel aufweist. Dies ist z. B. bei einer Maus mit zumindest einer Taste der Fall. Im Fall der Maus kann aus der Länge der Zeit, während der die Taste gedrückt ist, der Wert der Veränderungsstärke-Variablen ermittelt werden. Weiterhin kann die Maus wie oben beschrieben als Zeigereinrichtung zur Auswahl des oder der Feldwerte verwendet werden.

Außer der Zeitdauer der Betätigung der Eingabemittel kann alternativ oder zusätzlich auch die Frequenz und/ oder die Häufigkeit und/oder die Kraft einer Betätigung der Eingabemittel für die Bestimmung der Veränderungsstärke ausgewertet werden. Wenn eine Einrichtung mit einer berührungsempfindlichen Fläche (Touchpad) als Eingabemittel verwendet wird, so kann alternativ oder zusätzlich auch die Größe der Fläche, auf die ein Druck ausgeübt wird, und/ oder die Stärke des Drucks für die Bestimmung der Veränderungsstärke herangezogen werden.

Bei einer bevorzugten Ausführungsform wird aus einer Geschwindigkeit einer Bewegung der Eingabemittel ermittelt, welcher Wert der Veränderungsstärke-Variablen zu verwenden ist. Ein Beispiel hierfür ist der Fall, bei dem die Stärke der Veränderung durch die Bewegungsgeschwindigkeit der Maus bestimmt wird. Dabei kann die Bewegung kreisförmig und/oder linear sein und kann die Maximalgeschwindigkeit und/oder mittlere Geschwindigkeit und/oder Beschleunigung ausgewertet werden. Insbesondere ist es wiederum möglich, ein Zeitintervall durch die Dauer einer Betätigung von Eingabemitteln, etwa einer Maustaste, festzulegen. Der ausgewählte Feldwert zur Festlegung der Lage der Veränderungsbeziehung ist dann beispielsweise der der zu Beginn des Zeitintervalls aktuellen Position des Mauszeigers entsprechende Feldwert, und es wird ausgewertet, welche Geschwindigkeit die Mausbewegung während des Zeitintervalls hat.

Unter der "Stärke der Veränderung" wird insbesondere auch der Grad des Ausgleichs von Wertunterschieden der Feldwerte verstanden. Dies betrifft beispielsweise den Fall, dass Unterschiede benachbarter Feldwerte ausgeglichen werden und/oder Unterschiede zu einem Sollwert ausgeglichen werden. Ein derartiges "Glätten" eines Bereichs des Wertefeldes ist in vielen Fällen erwünscht und bedeutete bisher erheblichen Aufwand. Die Veränderung bezieht sich daher nicht notwendigerweise auf Unterschiede von numerischen Werten an derselben Stelle des Wertefeldes vor und nach der Veränderung, sondern kann sich auch auf Unterschiede von Feldwerten zu einem Referenzwert oder zu benachbarten Stellen des Wertefeldes beziehen.

Die erfindungsgemäße Anordnung zur Veränderung von numerischen Feldwerten in einem Wertefeld weist beispielsweise Folgendes auf:

- eine Datenverarbeitungseinrichtung zur Durchführung der Veränderung der Feldwerte,
- eine Abstands-Ermittlungseinrichtung zur Ermittlung eines Abstandes zwischen den Feldwerten,
- eine Veränderungsbeziehungs-Einrichtung, in der Informationen über eine Veränderungsbeziehung aufgenommen sind oder aufgenommen werden können,
- eine Veränderungsstärke-Ermittlungseinrichtung zur Ermittlung eines Wertes einer Veränderungsstärke-Variablen aus einer Art einer Handhabung von Eingabemitteln der Datenverarbeitungseinrichtung und
- eine Auswahl-Ermittlungseinrichtung zur Ermittlung aus einem Auswahl-Eingangssignal, welcher der Feldwerte ausgewählt ist oder welche der Feldwerte ausgewählt sind,

wobei die Datenverarbeitungseinrichtung, die Abstands-Ermittlungseinrichtung, die Veränderungsbeziehungs-Einrichtung, die Veränderungsstärke-Ermittlungseinrichtung und die Auswahl-Ermittlungseinrichtung derart miteinander gekoppelt sind, dass die Datenverarbeitungseinrichtung gemäß der Veränderungsbeziehung, unter Berücksichtigung des Abstandes zwischen den Feldwerten, in Abhängigkeit von dem ausgewählten Feldwert oder den ausgewählten Feldwerten und in Abhängigkeit von einem Wert der Veränderungsstärke-Variablen eine Vielzahl der numerischen Feldwerte verändern kann. Entsprechend den oben beschriebenen Varianten und Ausgestaltungen des Verfahrens kann auch die Anordnung weitere Merkmale aufweisen und/oder können die bereits genannten Merkmale in bestimmter Weise ausgestaltet sein.

Insbesondere kann die Anordnung Darstellungsmittel aufweisen, auf denen zumindest ein Teil des Wertefeldes bildlich darstellbar ist, wobei die Auswahl-Ermittlungseinrichtung mit einer Zeigereinrichtung verbunden und wobei die Auswahl-Ermittlungseinrichtung ausgestaltet ist, aus einer durch die Zeigereinrichtung gesteuerten Zeigerposition auf dem Darstellungsmittel zu ermitteln, welcher Feldwert ausgewählt ist oder welche Feldwerte ausgewählt sind.

Ferner gehört zum Umfang der Erfindung ein Computerprogramm, das bei Ablauf auf einem Computer oder Computer-Netzwerk das erfindungsgemäße Verfahren in einer seiner Ausgestaltungen ausführt.

Weiterhin gehört zum Umfang der Erfindung ein Computerprogramm mit Programmcode-Mitteln, um das erfindungsgemäße Verfahren in einer seiner Ausgestaltungen durchzuführen, wenn das Programm auf einem Computer oder Computer-Netzwerk ausgeführt wird. Insbesondere können die Programmcode-Mittel auf einem computerlesbaren Datenträger gespeichert sein.

Außerdem gehört zum Umfang der Erfindung ein Datenträger, auf dem eine Datenstruktur gespeichert ist, die nach einem Laden in einen Arbeits- und/oder Hauptspeicher eines Computers oder Computer-Netzwerkes das erfindungsgemäße Verfahren in einer seiner Ausgestaltungen ausführen kann.

Auch gehört zum Umfang der Erfindung ein Computerprogramm-Produkt mit auf einem maschinenlesbaren Träger gespeicherten Programmcode-Mitteln, um das erfindungsgemäße Verfahren in einer seiner Ausgestaltungen durchzuführen, wenn das Programm auf einem Computer oder Computer-Netzwerk ausgeführt wird. Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Im Folgenden wird die Erfindung anhand von Ausführungsbeispielen näher erläutert, die in den Figuren schematisch dargestellt sind. Sie ist jedoch nicht auf die Beispiele beschränkt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1    eine bildliche Darstellung von numerischen Feldwer- ten eines eindimensionalen Wertefeldes;

Fig. 2    eine bildliche Darstellung eines Wertesfeldes gemäß Fig. 1, wobei ein ausgewählter Bereich von Feldwerten durch Addieren einer numerischen Konstante ver- ändert ist;

Fig. 3    eine bildliche Darstellung von Feldwerten eines Wertefeldes gemäß Fig. 1, wobei als Bezugspunkt der achtzehnte Feldwert ausgewählt ist;

Fig. 4    eine bildliche Darstellung eines Wertefeldes gemäß Fig. 1 nach Veränderung des als Bezugspunkt ausgewählten achtzehnten Feldwertes, wobei die benach- barten Feldwerte entsprechend einer Gaußschen Fehlerfunktion exponentiell mit dem Negativen des Ab- standsquadrates zum Bezugspunkt mitverändert wur- den;

Fig. 5    eine bildliche Darstellung eines Wertefeldes gemäß Fig. 1 nach weiterer Veränderung entsprechend dem zu Fig. 4 beschriebenen Verfahren;

Fig. 6    eine bildliche Darstellung eines Wertefeldes gemäß Fig. 1 nach Auswahl des achtzehnten Feldwertes als Bezugspunkt, wobei die Feldwerte starke Unregelmä- ßigkeiten (Rauschen) aufweisen;

Fig. 7    eine bildliche Darstellung eines Wertefeldes gemäß Fig. 6 nach Glättung der Feldwerte, wobei die dem Bezugspunkt benachbarten Feldwerte in einer Weise an den Feldwert des Bezugspunktes angepasst bzw. verändert sind, so dass die Anpassung mit dem Ab- stand zum Bezugspunkt exponentiell abnimmt;

Fig. 8    eine bildliche Darstellung der bei einer Glättung gemäß Fig. 7 eines Wertefeldes gemäß Fig. 6 verwen- deten Veränderungsbeziehung, wobei die Veränderungsbeziehung exponentiell mit dem Abstand vom Be- zugspunkt abnimmt;

Fig. 9    eine bildliche Darstellung einer mit dem Abstand vom Bezugspunkt abnehmenden Veränderungsbeziehung in einem zweidimensionalen Wertefeld, wobei der Be- zugspunkt durch Positionieren einer Zeigereinrichtung ausgewählt ist;

Fig. 10    eine zur Ausführung des beschriebenen Verfahrens besonders bevorzugte Anordnung.

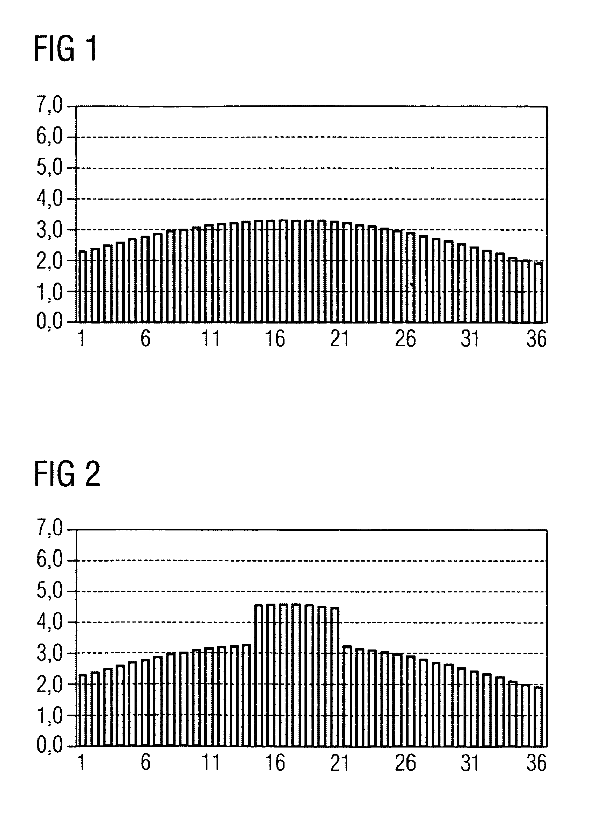

Fig. 1 zeigt als Beispiel der Erfindung eine bildliche Darstellung eines eindimensionalen Wertefeldes. Siebenunddreißig Felder des Wertefeldes sind dargestellt, und der Betrag der diesen Feldern zugeordneten Feldwerte ist jeweils als Balken aufgetragen. In diesem Wertefeld ist der Abstand zwischen zwei Feldern beispielsweise so definiert, dass benachbarte Felder den Abstand eins haben. Andere Definitionen des Abstandes sind möglich. In mehrdimensionalen Wertefeldern kann eine Definition des Abstandes entsprechend erfolgen.

Fig. 2 zeigt eine bildliche Darstellung des Wertefeldes aus Fig. 1, wobei ein Teil der Feldwerte nach folgendem Verfahren verändert wurde: Nach Auswahl mehrerer Feldwerte (in diesem Beispiel die Feldwerte 15 bis 21) wurden diese Feldwerte durch einfaches Addieren eines konstanten Wertes zu ihrem ursprünglichen Feldwert verändert.

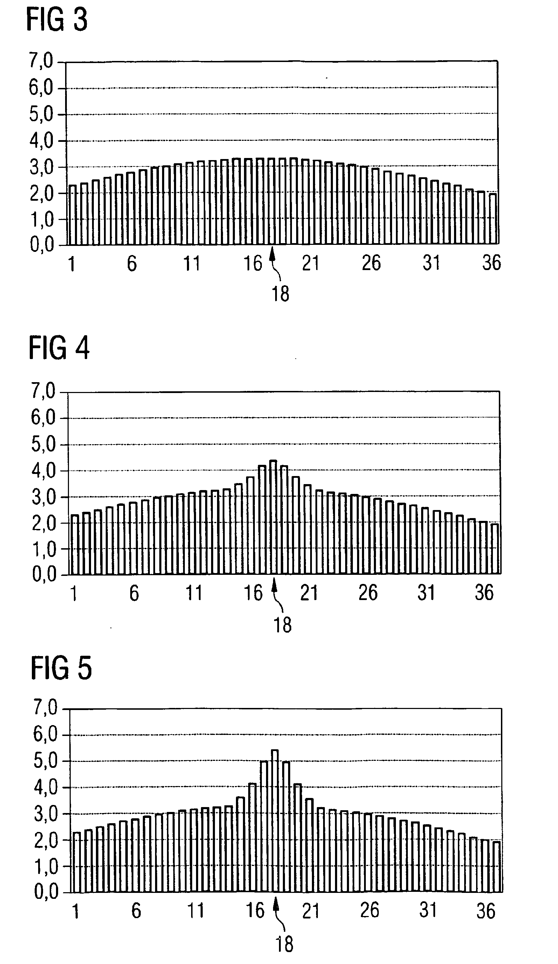

Die Figuren 3 bis 5 stellen ein Ausführungsbeispiel des erfindungsgemäßen Verfahrens zur Veränderung des Wertefeldes in Fig. 1 dar.

In Figur 3 ist ein Wertefeld dargestellt, dessen achtzehnter Feldwert, z. B. mittels einer Auswahl-Ermittlungseinrichtung (beispielsweise eines Zeigerinstrumentes) ausgewählt wird. Alternativ können auch mehrere Feldwerte ausgewählt werden, die nicht notwendigerweise zusammenhängend sein müssen, die aber einen zusammenhängenden ausgewählten Bereich bilden können.

Die Figuren 4 und 5 zeigen bildliche Darstellungen des Wertefeldes in Figur 3 nach Veränderung der Feldwerte. Die dem Bezugspunkt benachbarten Feldwerte werden in diesem Fall entsprechend einer Veränderungsbeziehung

$$\text{Gl. (1):} \quad F^{\bullet}(x) = F(x) + v \cdot \exp\left[-(x - x_B)^2/4\right]$$

mitverändert. Dabei bezeichnet F*(x) den neuen Feldwert an der Position x des Wertefeldes, F(x) den ursprünglichen Feldwert an der Position x, $x_B$ den ausgewählten Bezugspunkt und v eine Veränderungsstärke-Variable. Die Veränderungsbeziehung fällt also exponenziell mit dem Negativen des Abstandsquadrates vom Bezugspunkt ab. Als Veränderungsstärke-Variable dient der Vorfaktor v vor der Exponentialfunktion, der angibt um wieviel der Feldwert am Bezugspunkt selbst verändert wird.

Beispielsweise ist in Fig. 4 der Feldwert am Bezugspunkt (Position achtzehn) im Vergleich zu Fig. 3 additiv um eine Einheit erhöht. Die Feldwerte in benachbarten Feldern sind um einen entsprechend der Veränderungsbeziehung verringerten Betrag im Vergleich zu den entsprechenden Feldwerten in Fig. 3 erhöht. Beispielsweise ist der Feldwert an Position neunzehn (d.h. der Abstand zum Bezugspunkt ist eins) nur um ca. 0,8 Einheiten im Vergleich zum Feldwert an Position neunzehn in Fig. 3 erhöht. Die Veränderungsstärke-Variable v hat in dem Beispiel von Fig. 4 den Wert eins.

Im Beispiel von Fig. 5 ist die Veränderungsstärke-Variable v durch Betätigen einer Veränderungsstärke-Ermittlungseinrichtung von eins auf zwei erhöht. Der Betrag des Feldwertes am Bezugspunkt wird also um zwei Einheiten erhöht, wobei die Beträge der übrigen Feldwerte wiederum mitvergrößert werden, aber lediglich um einen entsprechend der Veränderungsbeziehung verringerten Betrag. Beispielsweise ist nun der Feldwert an Position neunzehn des Wertefeldes um ca. 1,5 Einheiten erhöht im Vergleich zum Feldwert an Position neunzehn in Fig. 3.

Die Veränderungsstärke-Variable v ist also in diesem Beispiel gleich dem Wert, um den der Feldwert am Bezugspunkt additiv erhöht bzw. erniedrigt wird. Statt einer Veränderungsstärke-Variablen können auch mehrere Veränderungsstärke-Variablen und/oder andere Veränderungs-Variablen in der Veränderungsbeziehung auftreten. So kann beispielsweise die Reichweite der Veränderung der übrigen, d.h. der nicht-ausgewählten Feldwerte des Wertefeldes variabel gestaltet werden. Wenn z. B. eine Veränderungsbeziehung der Form

$$\text{Gl. (2):} \quad F^{\bullet}(x) = F(x) + v \cdot \exp\left[-(x - x_B)^2/w^2\right]$$

verwendet wird, so ist die zweite Veränderungsstärke-Variable w ein Maß für die Reichweite der Veränderungsbeziehung. Während der Feldwert am Bezugspunkt um den Wert der Veränderungsstärke-Variable v additiv erhöht wird, wird der Feldwert im Abstand w vom Bezugspunkt lediglich um v/e additiv erhöht, wobei e die Eulersche Zahl ist. In diesem Beispiel verändert sich also mit der Reichweite auch die Stärke der Veränderung.

Der Anwender kann beispielsweise durch Betätigen einer Taste an der Veränderungsstärke-Ermittlungseinrichtung die Stärke der Veränderung des Feldwertes am Bezugspunkt v und mit einer weiteren Taste die Reichweite w der Veränderung beeinflussen.

Zahlreiche weitere Veränderungsbeziehungen sind möglich. Anstelle einer Veränderung des Feldwertes am Bezugspunkt um eine additive Variable sind beispielsweise eine Multiplikation des Feldwertes am Bezugspunkt mit einem Wert einer Veränderungsstärke-Variable oder Kombinationen aus mehreren Rechenoperationen möglich. Im Falle mehrdimensionaler Wertefelder können in verschiedenen Dimensionen unterschiedliche Veränderungsbeziehungen mit jeweils unterschiedlichen Veränderungsstärke-Variablen definiert sein.

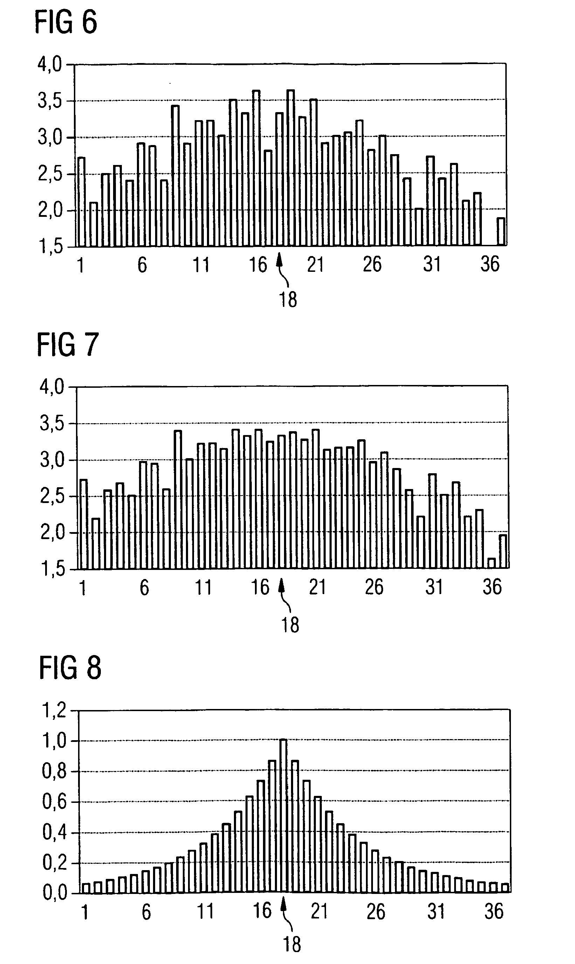

In Fig. 6 bis 8 ist ein Beispiel einer Variation des Verfahrens dargestellt, wobei Unterschiede zwischen Feldwerten eines Wertefeldes um einen Bezugspunkt herum ausgeglichen werden, d.h. das Wertefeld "geglättet" wird. In Fig. 6 ist das unveränderte Wertefeld aufgetragen. Wiederum wurde als Beispiel die achtzehnte Position des Wertefeldes als Bezugspunkt ausgewählt. Die Feldwerte zeigen starke statistische Schwankungen.

In Figur 7 ist das geglättete Wertefeld nach Durchführung eines erfindungsgemäßen Verfahrens dargestellt. Dabei wurden alle Feldwerte in einer Weise an den Feldwert des Bezugspunktes angeglichen, wobei der Grad der Angleichung exponentiell mit dem Negativen des Abstandes vom Bezugspunkt abfällt:

$$\text{Gl. (3):} \quad F^{\bullet}(x) = F(x) + \big(F(x_B) - F(x)\big) \cdot \exp\big[-|x - x_B|/w'\big]$$

Die Veränderungs-Variable w', welcher in Fig. 7 und 8 der Wert sechs zugewiesen ist, beschreibt also wiederum die Reichweite der Glättung. Im Abstand w' vom Bezugspunkt ist die Angleichung des Feldwertes an der Position x an den Feldwert am Bezugspunkt auf 1/e abgefallen (e=Eulersche Zahl).

Der Grad der Angleichung an den Feldwert am Bezugspunkt ist in Fig. 8 dargestellt. Dem Bezugspunkt benachbarte Feldwerte werden stärker an den Feldwert des Bezugspunktes angeglichen, vom Bezugspunkt weiter entfernte Werte werden entsprechend G1. (3) weniger verändert. Der Feldwert am Bezugspunkt selbst wird in diesem Beispiel nicht verändert.

Das beschriebene Ausführungsbeispiel zeigt, wie die Arbeit eines Anwenders (z. B. eines Ingenieurs bei der Entwicklung von Automobilmotoren) erleichtert wird. Das Verfahren ermöglicht es dem Anwender, die Feldwerte in der Nähe des gewählten Bezugspunktes intuitiv und mit geringem Aufwand (d.h. beispielsweise mit Blick auf einen Bildschirm und ohne Kenntnis der eingestellten Werte der Veränderungsstärke-Variablen) zu glätten, wobei das Ergebnis dieser Glättung unmittelbar wiederum bildlich dargestellt werden und ggf. ganz oder teilweise rückgängig gemacht werden kann. Dieses Rückgängigmachen kann beispielsweise wiederum durch eine Eingabe mit Hilfe der Veränderungsstärke-Ermittlungseinrichtung erfolgen (z. B. durch Drücken einer Maustaste).

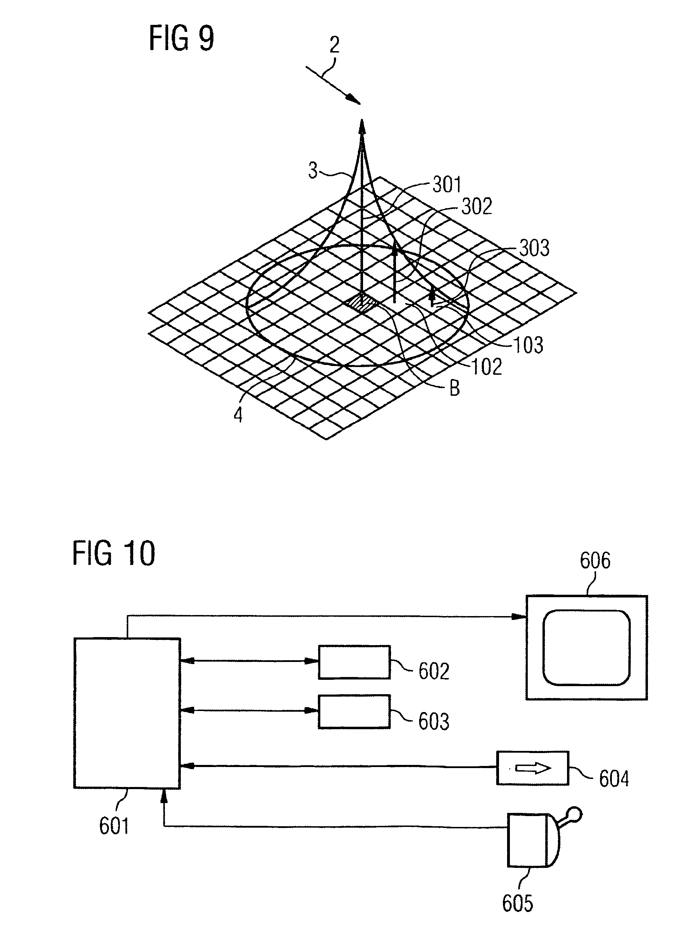

In Fig. 9 ist ein zweidimensionales Wertefeld durch eine Anordnung von Kästchen in einer Ebene dargestellt. Die Feldwerte des Wertefeldes sind in diesem Fall nicht aufgetragen, sondern können beispielsweise als numerische Werte in die Kästchen des Wertefeldes eingetragen sein. Alternativ können die Feldwerte z. B. in Form eines dreidimensionalen Balkendiagramms mit einem aus der Ebene aufragenden und/oder nach unten ragenden Balken pro Kästchen dargestellt sein.

Mit einem schräg nach unten weisenden Pfeil 2 ist in Fig. 9 eine momentan gewählte Zeigerposition bezeichnet, die von einem Benutzer eingestellt wurde, dass sie über einem schwarz gefüllten Kästchen liegt, wodurch der entsprechende Bezugspunkt B im Wertefeld festgelegt wird. Die Wirkung einer zuvor definierten Veränderungsbeziehung ist in hutartiger Form dargestellt. Dabei entspricht die Höhe des Schnittpunktes einer senkrechten Linie über einem beliebigen Feldwert der Wertefelder mit einer oberen Randfläche des hutartigen Gebildes 3 der Stärke der Veränderung des Feldwertes durch Anwendung der Veränderungsbeziehung. Für drei Feldwerte ist die Stärke der Veränderung der Feldwerte symbolisch durch Pfeile 301, 302, 303 dargestellt. Entsprechend der Veränderungsbeziehung werden alle Feldwerte in dem dargestellten kreisförmigen Bereich des Wertefeldes mitverändert. Beispielsweise ist die Veränderung des Feldwertes an der durch 102 gekennzeichneten Position des Wertefeldes größer als an der durch 103 gekennzeichneten Position.

Die Veränderungsbeziehung weist in diesem Beispiel keinen asymptotischen Verlauf auf, sondern ist begrenzt durch eine kreisförmige Grenzlinie 4. Nur bis zu dieser Grenzlinie, d.h. in einem dem Radius entsprechenden Abstand vom Bezugspunkt werden die Feldwerte des Wertefeldes mitverändert. An Stelle einer kreisförmigen Grenzlinie sind auch andere Grenzverläufe denkbar, wie z. B. Ellipsen oder Rechtecke.

Die Veränderungsbeziehung ist in diesem Beispiel rotationssymmetrisch um eine gedachte Achse durch den Bezugspunkt B senkrecht zur Ebene des Wertefeldes. Wie bereits beschrieben, kann die Veränderungsbeziehung in den beiden Dimensionen des hier dargestellten Wertefeldes auch verschieden definiert sein.

In Fig. 10 ist eine Anordnung zur Umsetzung des Verfahrens schematisch dargestellt. Eine Datenverarbeitungseinrichtung 601, in der in einem Datenspeicher ein Wertefeld abgespeichert werden kann, ist mit einer Abstands-Ermittlungseinrichtung 602 und einer Veränderungsbeziehungs-Einrichtung 603 verbunden. Weiterhin ist die Datenverarbeitungseinrichtung 601 mit einem bildlichen Darstellungsmittel 606 verbunden, sowie je ein Eingang der Datenverarbeitungseinrichtung 601 mit einem Ausgang einer Auswahl-Ermittlungseinrichtung 604 und einer Veränderungsstärke-Ermittlungseinrichtung 605. Die Einrichtungen 604 und 605 können alternativ eine gemeinsame Einheit bilden (z. B. Teil einer Maus).

Die Feldwerte des Wertefeldes werden, wie oben beschrieben, auf dem bildlichen Darstellungsmittel 606, vorzugsweise einem Bildschirm, bildlich dargestellt. Alternativ kann auch ein anderes bildliches Darstellungsmittel zum Einsatz kommen, z. B. eine Datenbrille (englisch: Head Mounted Display), wie sie beispielsweise zur Darstellung einer virtuellen Realität häufig verwendet wird. Dies ist insbesondere bei mehrdimensionalen Datenfeldern von Vorteil.

Mittels der Auswahl-Ermittlungseinrichtung 604, wobei es sich vorzugsweise um ein Zeigerinstrument handelt, wird vom Benutzer ein Bezugspunkt im Wertefeld festgelegt. Bei der Auswahl-Ermittlungseinrichtung kann es sich beispielsweise um eine Computermaus, einen Trackball oder um ein Touchpad handeln. Bei dem oben erwähnten Head Mounted Display als bildliches Darstellungsmittel bietet sich insbesondere ein Datenhandschuh zur Auswahl eines Bezugspunktes in mehrdimensionalen Wertefeldern an.

Weiterhin weist die Anordnung eine Veränderungsstärke-Ermittlungseinrichtung 605 auf, wobei mit dieser Veränderungsstärke-Ermittlungseinrichtung eine oder mehrere Veränderungsstärke-Variable festgelegt und verändert werden können.

Im folgenden wird beschrieben, wie mit der in Fig. 10 dargestellten Anordnung Feldwerte eines Wertefeldes verändert werden können. Zunächst wählt ein Benutzer zumindest einen Punkt als Bezugspunkt(e) aus und detektiert die Auswahl-Ermittlungseinrichtung 604 die Auswahl. Weiterhin wird bzw. werden das Wertefeld und der zumindest eine ausgewählte Bezugspunkt auf dem Darstellungsmittel 606 bildlich dargestellt. Durch Auswertung eines entsprechenden Eingabesignals des Benutzers stellt die Veränderungsstärke-Ermittlungseinrichtung 605 den Wert zumindest einer Veränderungsstärke-Variablen ein. Die Datenverarbeitungseinrichtung 601 berechnet mit Hilfe der Abstands-Ermittlungseinrichtung 602 den Abstand jedes Feldwertes von dem zumindest einen Bezugspunkt und berechnet die Veränderung jedes Feldwertes entsprechend einer in der Veränderungsbeziehungs-Einrichtung 603 geladenen vordefinierten Veränderungsbeziehung. Durch Ausgabe eines entsprechenden Bildsignals steuert die Datenverarbeitungseinrichtung 601 eine bildliche Darstellung des veränderten Wertefeldes auf dem Darstellungsmittel.

## Patentansprüche

1. Verfahren zur Veränderung von numerischen Feldwerten in einem Wertefeld, insbesondere von Parametern, wobei die Feldwerte bei einer Steuerung eines Betriebes einer Maschine und/oder bei einer Steuerung einer anderen Einrichtung in einem Kraftfahrzeug verwendet werden, wobei :

   - die numerischen Feldwerte derart in einer Datenverarbeitungseinrichtung (601) geladen und/oder gespeichert werden, dass innerhalb des Wertefeldes jeweils ein Abstand zwischen den Feldwerten definiert ist und/oder ermittelbar ist,
   - eine Veränderungsbeziehung (3) definiert wird oder ist, die eine Veränderung einer Vielzahl der numerischen Feldwerte in Abhängigkeit von dem Abstand der Feldwerte zu einem oder mehreren ausgewählten Feldwerten und in Abhängigkeit von einer Veränderungsstärke-Variablen beschreibt,
   - aus einer Art einer Handhabung von Eingabemitteln der Datenverarbeitungseinrichtung ermittelt wird, welcher Wert der Veränderungsstärke-Variablen zu verwenden ist,
   - aus einem Auswahl-Eingangssignal ermittelt wird, welcher Feldwert ausgewählt ist oder welche Feldwerte ausgewählt sind und
   - die Vielzahl der numerischen Feldwerte entsprechend der Veränderungsbeziehung verändert wird, **dadurch gekennzeichnet, dass**

   zumindest aus einer Zeitdauer einer Betätigung der Eingabemittel, einer Frequenz einer Betätigung der Eingabemittel, einer Häufigkeit einer Betätigung der Eingabemittel, einer Kraft einer Betätigung der Eingabemittel, einer Größe einer Fläche der Eingabemittel, auf die Druck ausgeübt wird, einer Geschwindigkeit einer Betätigung der Eingabemittel, einer Beschleunigung einer Betätigung der Eingabemittel, oder einer Geschwindigkeit einer Bewegung der Eingabemittel der Datenverarbeitungseinrichtung ermittelt wird, welcher Wert der Veränderungsstärke-Variablen zu verwenden ist.

2. Verfahren nach Anspruch1, wobei die Vielzahl der veränderten numerischen Feldwerte gespeichert und bei der Steuerung des Betriebes der Maschine in dem Kraftfahrzeug verwendet wird.

3. Verfahren nach Anspruch 2, wobei eine sich entlang einer Erstreckung des Wertefeldes verändernde Feldvariable einem Drehmoment, einer Last oder einer Drehzahl der Maschine entspricht.

4. Verfahren nach einem der Ansprüche 1 bis 3, wobei zumindest ein Teil des Wertefeldes auf einem Darstellungsmittel (606) bildlich dargestellt wird, wobei zumindest ein Teil der veränderten numerischen Feldwerte oder eine andere Darstellung der Veränderung während eines Veränderungsvorganges auf dem Darstellungsmittel (606) bildlich dargestellt werden, wobei während des Veränderungsvorganges wiederholt aus dem Auswahl-Eingangssignal ermittelt wird, welcher Feldwert momentan ausgewählt ist oder welche Feldwerte momentan ausgewählt sind, und wobei die Veränderungsbeziehung abhängig von dem momentan ausgewählten Feldwert oder von den momentan ausgewählten Feldwerten angewendet wird, um die Vielzahl der numerischen Feldwerte zu verändern.

5. Verfahren nach einem der Ansprüche 1 bis 4, wobei zumindest ein Teil des Wertefeldes auf einem Darstellungsmittel (606) bildlich dargestellt wird, wobei zumindest ein Teil der veränderten numerischen Feldwerte oder eine Darstellung einer potentiellen Veränderung während eines Veränderungsvorganges auf dem Darstellungsmittel (606) bildlich dargestellt werden und wobei aus den veränderten numerischen Feldwerten oder aus der Darstellung der potentiellen Veränderung eine momentan eingestellte Veränderungsstärke entnehmbar ist.

6. Verfahren nach einem der Ansprüche 1 bis 5, wobei zumindest ein Teil des Wertefeldes auf einem Darstellungsmittel (606) bildlich dargestellt wird und wobei das Auswahl- Eingangssignal einer durch eine Zeigereinrichtung gesteuerten Position auf dem Darstellungsmittel entspricht.

7. Anordnung zur Veränderung von numerischen Feldwerten in einem Wertefeld, insbesondere von parametern, wobei die Feldwerte bei einer Steuerung eines Betriebes einer Maschine in einem Kraftfahrzeug verwendet werden, wobei die Anordnung Folgendes aufweist:

   - eine Datenverarbeitungseinrichtung (601) zur Durchführung der Veränderung der Feldwerte,
   - eine Abstands-Ermittlungseinrichtung (602) zur Ermittlung eines Abstandes zwischen den Feldwerten,
   - eine Veränderungsbeziehungs-Einrichtung (603), in der Informationen über eine Veränderungsbeziehung aufgenommen sind oder aufgenommen werden können,
   - eine Veränderungsstärke-Ermittlungseinrichtung (605) zur

   Ermittlung eines Wertes einer Veränderungsstärke-Variablen aus einer Art einer Handhabung von Eingabemitteln der Datenverarbeitungseinrichtung und

   - eine Auswahl-Ermittlungseinrichtung (604) zur Ermittlung aus einem Auswahl-Eingangssignal, welcher der Feldwerte ausgewählt ist oder welche der Feldwerte ausgewählt sind,

   wobei die Datenverarbeitungseinrichtung, die Abstands-Ermittlungseinrichtung, die Veränderungsbeziehungs-Einrichtung, die Veränderungsstärke-Ermittlungseinrichtung und die Auswahl-Ermittlungseinrichtung derart miteinander gekoppelt sind, dass die Datenverarbeitungseinrichtung gemäss der Veränderungsbeziehung, unter Berücksichtigung des Abstandes zwischen den Feldwerten, in Abhängigkeit von dem ausgewählten Feldwert oder den ausgewählten Feldwerten und in Abhängigkeit von einem Wert der Veränderungsstärke-Variablen eine Vielzahl der numerischen Feldwerte verändern kann, **dadurch gekennzeichnet, dass** zumindest aus einer Zeitdauer einer Betätigung der Eingabemittel, einer Frequenz einer Betätigung der Eingabemittel, einer Häufigkeit einer Betätigung der Eingabemittel, einer Kraft einer Betätigung der Eingabemittel, einer Größe einer Fläche der Eingabemittel, auf die Druck ausgeübt wird, einer Geschwindigkeit einer Betätigung der Eingabemittel, einer Beschleunigung einer Betätigung der Eingabemittel, oder einer Geschwindigkeit einer Bewegung der Eingabemittel der Datenverarbeitungseinrichtung ermittelt wird, welcher Wert der Veränderungsstärke-Variablen zu verwenden ist.

8. Anordnung nach Anspruch 7, wobei die Anordnung Darstellungsmittel (606) aufweist, auf denen zumindest ein Teil des Wertefeldes bildlich darstellbar ist, wobei die Auswahl- Ermittlungseinrichtung (604) mit einer Zeigereinrichtung verbunden und wobei die Auswahl-Ermittlungseinrichtung ausgestaltet ist, aus einer durch die Zeigereinrichtung gesteuerten Zeigerposition auf dem Darstellungsmittel zu ermitteln, welcher Feldwert ausgewählt ist oder welche Feldwerte ausgewählt sind.

9. Computerprogramm, **dadurch gekennzeichnet, dass** es Programmcode-Mittel aufweist und bei Ablauf auf einem Computer oder Computer-Netzwerk das Verfahren nach einem der Ansprüche 1 bis 6 ausführt.

10. Datenträger, auf dem Programmcode-Mittel gespeichert ist, die nach einem Laden in einen Arbeits- und/oder Hauptspeicher eines Computers oder Computer-Netzwerkes das Verfahren nach einem der Ansprüche 1 bis 6 ausführt.

**Claims**

1. Method for modifying digital field values in a value field, in particular parameters, wherein the field values are used during the control of operation of a machine and/or during the control of another device in an automotive vehicle, wherein:

   - the digital field values are loaded and/or stored in a data processing device (601) in such a way that within the value field a distance between the field values in each case is defined and/or can be determined,
- a modification relation (3) is or has been defined which describes a modification of a plurality of digital field values as a function of the distance of the field values from one or more selected field values and as a function of a modification power variable,
- it is determined from a type of handling of input means of the data processing device, which value of the modification power variable is to be used,
- it is determined from a selection input signal which field value is or which field values are selected, and
- the plurality of digital field values are modified in accordance with the modification relation, **characterised in that**

it is determined at least from a time duration of an activation of the input means, a rate of activation of the input means, a frequency of activation of the input means, a strength of activation of the input means, a size of a surface of the input means on which pressure is exerted, a speed of activation of the input means, an acceleration of activation of the input means or a speed of a movement of the input means of the data processing device, which value of the modification power variable is to be used.

2. Method according to claim 1, wherein the plurality of modified digital field values are stored and used in the control of the operation of the machine in the automotive vehicle.

3. Method according to claim 2, wherein a field variable changing along an extension of the value field corresponds to a torque, a load or an rpm of the machine.

4. Method according to one of claims 1 to 3, wherein at least part of the value field is presented as an image on a visualisation means (606), wherein at least some of the modified digital field values or a different representation of the change during a modification process are or is presented as an image on the visualisation means (606), wherein during the modification process it is determined repeatedly from the selection input signal which field value is or which field values are currently selected, and wherein the modification relation is applied as a function of the currently selected field value or field values in order to modify the plurality of digital field values.

5. Method according to one of claims 1 to 4, wherein at least part of the value field is presented as an image on a visualisation means (606), wherein at least some of the modified digital field values or a representation of a potential modification during a modification process are or is presented as an image on the visualisation means (606), and wherein a currently set modification power can be derived from the modified digital field values or from the representation of the potential modification.

6. Method according to one of claims 1 to 5, wherein at least part of the value field is presented as an image on a visualisation means (606) and wherein the selection input signal corresponds to a position controlled by a pointer device on the visualisation means.

7. Arrangement for modifying digital field values in a value field, in particular parameters, wherein the field values are used during the control of operation of a machine in an automotive vehicle, wherein the arrangement has the following:

- a data processing device (601) for carrying out the modification of the field values,
- a distance determination device (602) for determining a distance between the field values,
- a modification relation device (603) in which information about a modification relation is recorded or can be recorded,
- a modification power determination device (605) for determining a value of a modification power variable from a type of handling of input means of the data processing device and
- a selection determination device (604) for determining from a selection input signal which of the field values is selected or which of the field values are selected,

wherein the data processing device, the distance determination device, the modification relation device, the modification power determination device and the selection determination device are coupled to one another such that the data processing device can modify a plurality of digital field values in accordance with the modification relation, taking into account the distance between the field values, as a function of the selected field value or field values and as a function of a value of the modification power variable, **characterised in that** it is determined at least from a time duration of an activation of the input means, a rate of activation of the input means, a frequency of activation of the input means, a strength of activation of the input means, a size of a surface of the input means on which pressure is exerted, a speed of activation of the input means, an acceleration of activation of the input means or a speed of a movement of the input means of the data processing device, which value of the modification power variable is to be used.

8. Arrangement according to claim 7, wherein the arrangement has visualisation means (606) on which at least part of the value field can be presented as an image, wherein the selection determination device (604) is connected to a pointer device and wherein the selection determination device is embodied to determine from a pointer position controlled by the pointer device on the visualisation means, which field value or field values is or are selected.

9. Computer program, **characterised in that** it has program code means and carries out the method according to one of claims 1 to 6 when executed on a computer or computer network.

10. Data medium on which program code means are stored which after being loaded into a random access memory and/or main memory of a computer or computer network carry out the method according to one of claims 1 to 6.

**Revendications**

1. Procédé de modification de valeurs de champ numériques dans un champ de valeurs, en particulier de paramètres, dans lequel les valeurs de champ sont utilisées lors de la commande de fonctionnement d'un moteur et/ou lors de la commande d'un autre dispositif dans un véhicule à moteur, dans lequel :

   - les valeurs de champ numériques sont chargées et/ou mémorisées dans un dispositif de traitement de données (601) de sorte que l'on puisse définir et/ou déterminer à l'intérieur du champ de valeurs, respectivement, un intervalle entre les valeurs de champ,
   - il est ou a été défini un rapport de modification (3) qui décrit une modification d'une pluralité des valeurs de champ numériques en fonction de l'intervalle entre des valeurs de champ et une ou plusieurs valeurs de champ choisies et en fonction d'une variable de l'intensité de modification,
   - on détermine par un type de manipulation de moyens d'entrée du dispositif de traitement de données quelle valeur de la variable de l'intensité de modification il faut utiliser,
   - on détermine à partir d'un signal d'entrée de sélection quelle valeur de champ a été choisie ou quelles valeurs de champ ont été choisies, et
   - on modifie la pluralité des valeurs de champ numériques en fonction du rapport de modification, **caractérisé en ce que** :

   on détermine au moins à partir d'une période de temps d'une commande des moyens d'entrée, d'une fréquence d'une commande des moyens d'entrée, d'un taux de fréquence d'une commande des moyens d'entrée, d'une force d'une commande des moyens d'entrée, d'une grandeur d'une surface des moyens d'entrée, sur laquelle est exercée une pression, d'une vitesse d'une commande des moyens d'entrée, d'une accélération d'une commande des moyens d'entrée ou d'une vitesse d'un déplacement des moyens d'entrée du dispositif de traitement de données quelle valeur de la variable de l'intensité de modification il faut utiliser.

2. Procédé selon la revendication 1, dans lequel la pluralité des valeurs de champ numériques modifiées est mémorisée et est utilisée pour la commande du fonctionnement du moteur dans le véhicule à moteur.

3. Procédé selon la revendication 2, dans lequel une variable de champ se modifiant au fil d'une extension du champ de valeurs correspond à un couple de torsion, à une charge ou à un nombre de tours du moteur machine.

4. Procédé selon l'une quelconque des revendications 1 à 3, dans lequel au moins une partie du champ de valeurs est représentée sur un moyen de représentation (606) par une image, dans lequel au moins une partie des valeurs de champ numériques modifiées ou une autre représentation de la modification au cours d'une opération de modification est représentée sur le moyen de représentation (606) par une image, dans lequel on obtient au cours de l'opération de modification de manière répétée à partir du signal d'entrée de sélection quelle valeur de champ a été choisie momentanément ou quelles valeurs de champ ont été choisies momentanément et dans lequel le rapport de modification est utilisé en fonction de la valeur de champ choisie momentanément ou des valeurs de champ choisies momentanément, pour modifier la pluralité des valeurs de champ numériques.

5. Procédé selon l'une quelconque des revendications 1 à 4, dans lequel au moins une partie du champ de valeurs est représentée sur un moyen de représentation (606) par une image, dans lequel au moins une partie des valeurs de champ numériques modifiées ou une représentation d'une modification potentielle au cours d'une opération de modification est représentée sur le moyen de représentation (606) par une image et dans lequel une intensité de modification réglée momentanément est retirée des valeurs de champ numériques modifiées ou de la représentation de la modification potentielle.

6. Procédé selon l'une quelconque des revendications 1 à 5, dans lequel au moins une partie du champ de valeurs est représentée sur un moyen de représentation (606) par une image et dans lequel le signal d'entrée de sélection correspond à une position commandée par un indicateur à aiguille sur le moyen de représentation.

7. Aménagement de modification de valeurs de champ numériques dans un champ de valeurs, en particulier de paramètres, dans lequel les valeurs de champ sont utilisées lors d'une commande d'un fonctionnement d'un moteur dans un véhicule à moteur, dans lequel l'aménagement suivant présente :

   - un dispositif de traitement de données (601) pour réaliser la modification des valeurs de champ,
   - un dispositif de détermination d'intervalle (602) pour déterminer un intervalle entre les valeurs de champ,
   - un dispositif de rapport de modification (603), dans lequel des informations sur un rapport de modification ont été reçues ou peuvent être reçues.
   - un dispositif de détermination de l'intensité de modification (605) pour déterminer une valeur d'une variable d'intensité de modification à partir d'un type de manipulation de moyens d'entrée du dispositif de traitement de données, et
   - un dispositif de détermination de sélection (604) pour déterminer à partir d'un signal d'entrée de sélection laquelle des valeurs de champ a été choisie ou lesquelles des valeurs de champ ont été choisies,

   dans lequel le dispositif de traitement de données, le dispositif de détermination d'intervalle, le dispositif de rapport de modification, le dispositif de détermination de l'intensité de modification et le dispositif de détermination de sélection sont couplés les uns aux autres de sorte que le dispositif de traitement de données puisse, selon le rapport de modification, en tenant compte de l'intervalle entre les valeurs de champ, en fonction de la valeur de champ choisie ou des valeurs de champ choisies et en fonction d'une valeur de la variable d'intensité de modification, modifier une pluralité des valeurs de champ numériques,
   **caractérisé en ce que**
   on détermine au moins à partir d'une période de temps d'une commande des moyens d'entrée, d'une fréquence d'une commande des moyens d'entrée, d'un taux de fréquence d'une commande des moyens d'entrée, d'une force d'une commande des moyens d'entrée, d'une grandeur d'une surface des moyens d'entrée, sur laquelle est exercée une pression, d'une vitesse d'une commande des moyens d'entrée, d'une accélération d'une commande des moyens d'entrée ou d'une vitesse d'un déplacement des moyens d'entrée du dispositif de traitement de données quelle valeur de la variable de l'intensité de modification il faut utiliser.

8. Aménagement selon la revendication 7, dans lequel l'aménagement présente un moyen de représentation (606), sur lequel au moins une partie du champ de valeurs peut être représentée par une image, dans lequel le dispositif de détermination de sélection (604) est relié à un indicateur à aiguille et dans lequel le dispositif de détermination de sélection est conçu pour déterminer à partir d'une position de l'aiguille commandée par l'indicateur à aiguille sur le moyen de représentation quelle valeur de champ a été choisie ou quelles valeurs de champ ont été choisies.

9. Programme informatique, **caractérisé en ce qu'**il présente un moyen de programmation et exécute le procédé selon l'une quelconque des revendication 1 à 6 lors de son déroulement sur un ordinateur ou un réseau d'ordinateurs.

10. Support de données, sur lequel est mémorisé un moyen de programmation, qui, après un chargement dans une mémoire de travail et/ou une mémoire centrale d'un ordinateur ou d'un réseau d'ordinateurs, exécute le procédé selon l'une quelconque des revendications 1 à 6.

## FIG 1

## FIG 2

## FIG 3

## FIG 4

## FIG 5

## FIG 6

## FIG 7

## FIG 8

## FIG 9

## FIG 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8904425 A